# EUROPEAN PATENT APPLICATION

(11) **EP 4 800 875 A1**
(43) Date of publication of application: **02.09.2026**
(21) Application number: 24887580.9
(22) Date of filing: 27.08.2024
(51) Int. Cl.: H02J 7/00, H01M 10/44

(54) **BATTERY CHARGING CONTROL METHOD, APPARATUS AND DEVICE, AND STORAGE MEDIUM**

(30) Priority: 07.11.2023 CN 202311464989
(71) Applicant: Contemporary Amperex Technology Co., Limited, Ningde, Fujian 352100 (CN)
(72) Inventor: HUANG, Jintao, Ningde, Fujian 352100 (CN); DU, Mingshu, Ningde, Fujian 352100 (CN); ZHANG, Shichang, Ningde, Fujian 352100 (CN); CHEN, Yushan, Ningde, Fujian 352100 (CN); HUANG, Shan, Ningde, Fujian 352100 (CN)
(74) Representative: Ziebig Hengelhaupt Intellectual Property Attorneys Patentanwaltskanzlei PartGmbB
(86) International application number: PCT/CN2024/114891
(87) International publication number: WO 2025/097961

(57) **Abstract**

The present application relates to a battery charging control method, apparatus and device, and a storage medium. The method comprises: in the process of a battery being at a target charging stage, detecting whether an abnormal battery cell having a charge anomaly exists in the battery; and if the abnormal battery cell exists, adjusting charging parameters of the target charging stage, and charging on the basis of the adjusted charging parameters until the target charging stage is ended. Therefore, compared with the manner in the prior art of charging a battery on the basis of a pre-formulated charging mode, by means of the manner in the embodiments of the present application of detecting whether an abnormal battery cell having a charge anomaly exists in a battery, and upon detecting that the abnormal battery cell exists in the battery, adjusting charging parameters of a target charging stage, and charging the battery on the basis of the adjusted charging parameters, the battery can be charged on the basis of the capability of the battery, so that the abnormal battery cell can be protected, and thus normal operation of the battery charging process is facilitated.

## Description

### CROSS-REFERENCE

The present application refers to Chinese Patent Application No. 2023114649897, filed on November 7, 2023, and entitled "METHOD, APPARATUS, AND DEVICE FOR CONTROLLING BATTERY CHARGING, AND STORAGE MEDIUM", which is incorporated herein by reference in its entirety.

### TECHNICAL FIELD

The present application relates to the technical field of batteries, and in particular, to a method, apparatus, and device for controlling battery charging, and a storage medium.

### BACKGROUND

With the development of new energy technologies, the application of chargeable and dischargeable batteries is becoming increasingly widespread. The charging process of a battery is a very important application process for the battery.

In the related art, the battery is usually charged according to a predetermined charging mode. However, the charging mode in the related art may damage a cell having relatively poor performance.

### SUMMARY

In view of the above problem, the present application provides a method, apparatus, and device for controlling battery charging, and a storage medium, which are capable of solving the problem in the related art that the charging mode may damage the cell having relatively poor performance.

In a first aspect, the present application provides a method for controlling battery charging. The method includes:
detecting, during a process in which a battery is in a target charging stage, whether an abnormal cell with a charging abnormality exists in the battery; and
adjusting, if the abnormal cell exists, charging parameters of the target charging stage, and performing charging based on the adjusted charging parameters until the target charging stage ends, where the charging parameters include a charging current and a cut-off voltage.

In the technical solution of the embodiments of the present application, during the process in which a battery is in a target charging stage, according to the method of detecting whether an abnormal cell with a charging abnormality exists in the battery, and adjusting, in the case of detecting that the abnormal cell exists in the battery, the charging parameters of the target charging stage and performing charging based on the adjusted charging parameters, charging based on the battery capability can be implemented, thereby protecting the abnormal cell and facilitating the normal operation of the battery charging process.

In some embodiments, adjusting the charging parameters of the target charging stage, and performing charging based on the adjusted charging parameters until the target charging stage ends includes:
determining a charging abnormality type of the battery according to a charging state parameter of each abnormal cell; and
adjusting the charging parameters of the target charging stage according to the charging abnormality type, and performing charging based on the adjusted charging parameters until the target charging stage ends.

In the technical solution of the embodiments of the present application, the method of correspondingly and dynamically adjusting the charging parameters of the target charging stage according to the charging abnormality type of the battery can be conducive to further protecting the abnormal cells in the battery, and further increasing the charge amount of the battery.

In some embodiments, the charging state parameter includes a state of health (SOH) and/or a state of charge (SOC), and determining the charging abnormality type of the battery according to the charging state parameter of each abnormal cell includes:
determining, if the SOH of any abnormal cell is abnormal, that the charging abnormality type of the battery is an SOH charging abnormality type; and
determining, if the SOC of each abnormal cell is abnormal, that the charging abnormality type of the battery is an SOC charging abnormality type.

In some embodiments, adjusting the charging parameters of the target charging stage according to the charging abnormality type, and performing charging based on the adjusted charging parameters until the target charging stage ends includes:
gradually decreasing, if the charging abnormality type of the battery is the SOH charging abnormality type, the charging current of the target charging stage; and
charging, after each decrease in the charging current, the battery to a preset cut-off voltage of the target charging stage according to a decreased charging current if an anode potential of the battery is greater than a preset lithium plating voltage and the decreased charging current is greater than a preset current threshold, and continuing to gradually decrease the charging current of the target charging stage, until the anode potential of the battery is not greater than the preset lithium plating voltage or the decreased charging current is not greater than the preset current threshold, thus ending the target charging stage, where the preset cut-off voltage may be a difference between an original cut-off voltage of the target charging stage and a preset voltage.

In the technical solution of the embodiments of the present application, if the charging abnormality type of the battery is the SOH charging abnormality type, according to the method of gradually decreasing the charging current of the target charging stage, and charging, in the case of detecting that the anode potential of the battery is greater than the preset lithium plating voltage and the decreased charging current is greater than the preset current threshold, the battery to the preset cut-off voltage of the target charging stage according to the decreased charging current, the charge amount of the battery can be further increased on the basis of protecting the abnormal cells in the battery, thereby improving the charging efficiency of the battery.

In some embodiments, adjusting the charging parameters of the target charging stage according to the charging abnormality type, and performing charging based on the adjusted charging parameters until the target charging stage ends includes:
decreasing, if the charging abnormality type of the battery is the SOC charging abnormality type, the charging current of the target charging stage to a preset current, and charging the battery according to the preset current for a preset duration;
adjusting the charging current of the target charging stage to a target charging current, and charging the battery according to the target charging current, where the target charging current is a charging current corresponding to a condition in which an anode potential of the battery is greater than a preset lithium plating voltage and a charging time is shortest; and
charging, if a voltage of each abnormal cell satisfies a condition for continuing charging, the battery to a preset cut-off voltage of the target charging stage according to the target charging current, where the preset cut-off voltage may be a difference between an original cut-off voltage of the target charging stage and a preset voltage.

In the technical solution of the embodiments of the present application, if the charging abnormality type of the battery is the SOC charging abnormality type, according to the method of adjusting the charging current of the target charging stage step by step, and charging, in the case where the voltage of each abnormal cell satisfies the condition for continuing charging, the battery according to the adjusted charging current to the preset cut-off voltage of the target charging stage, the charge amount of the battery can be further increased on the basis of protecting the abnormal cells in the battery, thereby improving the charging efficiency of the battery.

In some embodiments, the method further includes:
determining the target charging current according to an electrochemical model of the battery, with an objective that the anode potential of the battery is greater than the preset lithium plating voltage and the charging time is the shortest.

In some embodiments, the method further includes:
returning, in a case where the voltage of any abnormal cell does not satisfy the condition for continuing charging, to execute the step of decreasing the charging current of the target charging stage to the preset current.

In some embodiments, detecting whether the abnormal cell with the charging abnormality exists in the battery includes:
determining a charging state parameter of each cell according to a cell parameter of each cell in the battery by using a preset feature extraction algorithm; and
determining whether the abnormal cell with the charging abnormality exists in the battery according to the charging state parameter of each cell.

In the technical solution of the embodiments of the present application, during the process in which the battery is in the target charging stage, the charging state parameter is determined according to the cell parameter of each cell in the battery, and whether an abnormal cell with a charging abnormality exists in the battery is determined according to the charging state parameter, thereby facilitating the adjustment of the charging parameters of the target charging stage in the case of detecting that the abnormal cell exists in the battery. As can be seen, the embodiments of the present application can facilitate the adjustment of the charging parameters of the target charging stage in a timely manner in the case where the charging parameters need to be adjusted, thereby further saving adjustment resources on the basis of protecting the abnormal cell in the battery.

In some embodiments, determining whether the abnormal cell with the charging abnormality exists in the battery according to the charging state parameter of each cell includes:
determining, if a difference between a charging state parameter of a first cell in the battery and an average state parameter value of charging state parameters of other cells in the battery excluding the first cell is greater than a first preset threshold, that the first cell is the abnormal cell.

In some embodiments, determining whether the abnormal cell with the charging abnormality exists in the battery according to the charging state parameter of each cell includes:
determining, if differences between a charging state parameter of a second cell in the battery and charging state parameters of a plurality of cells in the battery excluding the second cell are all greater than a second preset threshold, that the second cell is the abnormal cell.

In some embodiments, determining the charging state parameter of each cell according to the cell parameter of each cell in the battery by using the preset feature extraction algorithm includes:
determining, for each cell, a parameter curve corresponding to the preset feature extraction algorithm according to the cell parameter of the cell; and
determining, based on the parameter curve, the charging state parameter of the cell according to the preset feature extraction algorithm.

In a second aspect, the present application provides an apparatus for controlling battery charging. The apparatus includes:
a detection module, configured to detect, during a process in which a battery is in a target charging stage, whether an abnormal cell with a charging abnormality exists in the battery; and
an adjustment module, configured to adjust, if the abnormal cell exists, charging parameters of the target charging stage, and perform charging based on the adjusted charging parameters until the target charging stage ends, where the charging parameters include a charging current and a cut-off voltage.

In a third aspect, the present application provides a device for controlling battery charging. The device includes a memory and a processor; the memory stores a computer program, and the processor, when executing the computer program, implements the steps in the embodiments of the method for controlling battery charging described above.

In a fourth aspect, the present application provides a computer-readable storage medium. The computer-readable storage medium stores a computer program; the computer program, when executed by a processor, causes the processor to implement the steps in the embodiments of the method for controlling battery charging described above.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic flowchart of a method for controlling battery charging according to some embodiments of the present application;
FIG. 2 is a schematic flowchart of a method for controlling battery charging according to some other embodiments of the present application;
FIG. 3 is a first schematic flowchart of an adjustment of a charging parameter according to an embodiment of the present application;
FIG. 4 is a second schematic flowchart of an adjustment of a charging parameter according to an embodiment of the present application;
FIG. 5 is a schematic flowchart of a method for controlling battery charging according to some other embodiments of the present application;
FIG. 6 is a first schematic diagram of a dV/dt curve according to an embodiment of the present application;
FIG. 7 is a second schematic diagram of a dV/dt curve according to an embodiment of the present application;
FIG. 8 is a schematic diagram of a dQ/dV curve according to an embodiment of the present application;
FIG. 9 is a schematic diagram of a dV/dQ curve according to an embodiment of the present application;
FIG. 10 is a schematic flowchart of a method for controlling battery charging according to some other embodiments of the present application;
FIG. 11 is a schematic structural diagram of an apparatus for controlling battery charging according to some embodiments of the present application;
FIG. 12 is a schematic structural diagram of an apparatus for controlling battery charging according to some other embodiments of the present application;
FIG. 13 is a schematic structural diagram of an apparatus for controlling battery charging according to some other embodiments of the present application; and
FIG. 14 is a schematic structural diagram of a device for controlling battery charging according to some embodiments of the present application.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meanings as commonly understood by those skilled in the technical field to which the present application belongs. The terms used herein are only used to illustrate the specific embodiments, rather than limit the present application. The terms "include", "comprise", and any variants thereof, in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, the term "plurality of" means no less than two (including two).

A method for controlling battery charging, an apparatus for controlling battery charging, a device for controlling battery charging, and a storage medium, provided according to the embodiments of the present application, are applicable to a battery charging application scenario of an electric device or a battery charging application scenario of an electrical energy storage system. Certainly, the method for controlling battery charging, the apparatus for controlling battery charging, the device for controlling battery charging, and the storage medium are also applicable to other application scenarios.

The electric device involved in the embodiments of the present application may be, but is not limited to, an electric toy, an electric tool, a battery vehicle, an electric vehicle, a ship, or a spacecraft. The electric toy may include a stationary or mobile electric toy, such as an electric vehicle toy, an electric ship toy, or an electric airplane toy; the spacecraft may include an airplane, a rocket, a space shuttle, a spaceship, and the like.

Illustratively, the device for controlling battery charging according to the embodiments of the present application may include, but is not limited to, a BMS or an energy storage control device. For example, in the case where the method for controlling battery charging is applied to the battery charging application scenario of the electric device, the device for controlling battery charging may include, but is not limited to, the BMS. For another example, in the case where the method for controlling battery charging is applied to the battery charging application scenario of the electrical energy storage system, the device for controlling battery charging may include, but is not limited to, the BMS or the energy storage control device.

In the related art, the battery is usually charged according to a predetermined charging mode, and the charging mode cannot be adjusted according to a charging condition of the battery during the charging process. As can be seen, the charging mode in the related art may damage a cell having relatively poor performance.

To solve the problem in the related art that the cell having relatively poor performance may be damaged, it is proposed by the embodiments of the present application that, according to the method of detecting whether an abnormal cell with a charging abnormality exists in a battery, and adjusting, in the case of detecting that the abnormal cell exists in the battery, a charging parameter of a target charging stage and performing charging based on the adjusted charging parameter, charging based on the battery capability can be implemented, thereby protecting the abnormal cell and facilitating the normal operation of the battery charging process.

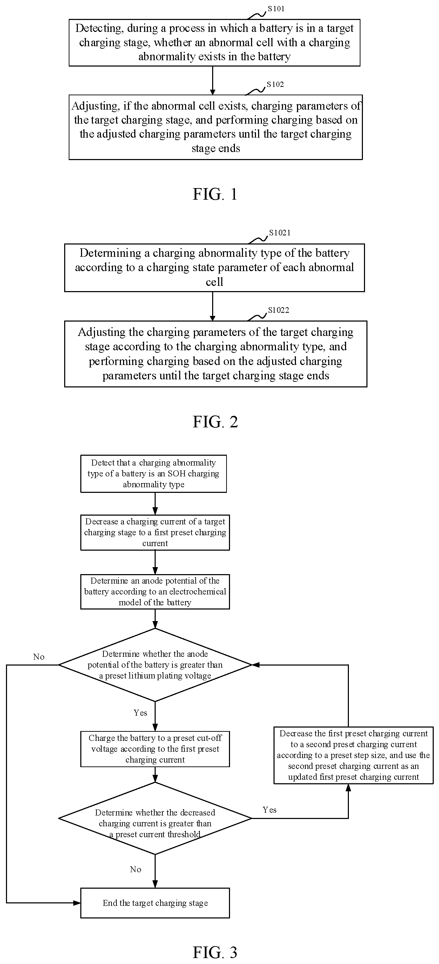

In some embodiments, FIG. 1 is a schematic flowchart of a method for controlling battery charging according to some embodiments of the present application. In the embodiments of the present application, an example in which the method is applied to a device for controlling battery charging is used for description. As shown in FIG. 1, the method according to the embodiments of the present application may include the following steps.

In step S101, during a process in which a battery is in a target charging stage, it is detected whether an abnormal cell with a charging abnormality exists in the battery.

In the embodiments of the present application, a battery charging process may include, but is not limited to, a plurality of charging stages. Charging currents of different charging stages may be different, charging voltages of different charging stages may be different, and/or cut-off voltages of different charging stages may be different.

In this step, during a process in which the battery is in the target charging stage in the battery charging process, the device for controlling battery charging may detect whether an abnormal cell with a charging abnormality exists in the battery.

Illustratively, the target charging stage in the embodiments of the present application may include, but is not limited to, a target constant-current charging stage. The target constant-current charging stage may be any constant-current charging stage in the battery charging process. It should be understood that the battery charging process may include, but is not limited to, a plurality of constant-current charging stages. Charging currents of different constant-current charging stages may be different, and/or cut-off voltages of different constant-current charging stages may be different.

Illustratively, during a process in which the battery is in the target charging stage, the device for controlling battery charging may detect in real time whether an abnormal cell with a charging abnormality exists in the battery, so as to determine the abnormal cell in the battery in a timely manner.

Illustratively, during the process in which the battery is in the target charging stage, the device for controlling battery charging may detect whether an abnormal cell with a charging abnormality exists in the battery in the case where a preset detection condition is satisfied, so as to determine the abnormal cell in the battery in a timely manner while saving detection resources. The preset detection condition may include, but is not limited to: a detection interval reaching a preset time interval, or a cell parameter of any cell in the battery satisfying a preset detection indicator.

Certainly, during the process in which the battery is in the target charging stage in the battery charging process, the device for controlling battery charging may also detect, by means of other modes, whether an abnormal cell with a charging abnormality exists in the battery.

In step S102, if the abnormal cell exists, charging parameters of the target charging stage are adjusted, and charging is performed based on the adjusted charging parameters until the target charging stage ends.

Illustratively, the charging parameters in the embodiments of the present application may include, but are not limited to, at least one of: a charging current, a cut-off voltage, or a thermal management temperature.

In this step, if it is detected that the abnormal cell with the charging abnormality exists in the battery, the device for controlling battery charging may adjust the charging parameters of the target charging stage, and charge the battery based on the adjusted charging parameters until the target charging stage ends.

In the embodiments of the present application, the device for controlling battery charging dynamically adjusts the charging parameter of the target charging stage (for example, adjusting the charging current, decreasing the cut-off voltage, and/or decreasing the thermal management temperature), such that during a process of charging the battery based on the dynamically adjusted charging parameter, charging based on the battery capability can be implemented, thereby protecting the abnormal cell and facilitating the normal operation of the battery charging process.

Optionally, the charging parameter in the embodiments of the present application may include the charging current and the cut-off voltage. Correspondingly, the adjustment, by the device for controlling battery charging, of the charging parameter of the target charging stage may include adjusting the charging current and decreasing the cut-off voltage.

It should be understood that if the target charging stage is not the last charging stage in the battery charging process, after the target charging stage ends, the device for controlling battery charging may charge the battery in a next charging stage following the target charging stage, and take the next charging stage as a new target charging stage.

If the target charging stage is the last charging stage in the battery charging process, after the target charging stage ends, the device for controlling battery charging may end the charging process of the battery.

In the above method for controlling battery charging, whether an abnormal cell with a charging abnormality exists in the battery is detected during the process in which the battery is in the target charging stage. Further, if the abnormal cell exists, charging parameters of the target charging stage are adjusted, and charging is performed based on the adjusted charging parameters until the target charging stage ends. As can be seen, compared with the method of charging a battery according to a predetermined charging mode in the related art, in the embodiments of the present application, according to the method of detecting whether an abnormal cell with a charging abnormality exists in the battery, and adjusting, in the case of detecting that the abnormal cell exists in the battery, the charging parameters of the target charging stage and performing charging based on the adjusted charging parameters, charging based on the battery capability can be implemented, thereby protecting the abnormal cell and facilitating the normal operation of the battery charging process.

In some embodiments, FIG. 2 is a schematic flowchart of a method for controlling battery charging according to some other embodiments of the present application. Based on the above embodiments, the embodiments of the present application provide an exemplary introduction and description of the related contents of "adjusting the charging parameters of the target charging stage, and performing charging based on the adjusted charging parameters until the target charging stage ends" in the above step S102. As shown in FIG. 2, the step S102 according to the embodiments of the present application may include the following steps.

In step S1021, a charging abnormality type of the battery is determined according to a charging state parameter of each abnormal cell.

The charging state parameter of any cell in the embodiments of the present application may be used to indicate a state parameter of the cell during a charging process. Illustratively, the charging state parameter may include, but is not limited to: a state of health (SOH) and/or a state of charge (SOC). It should be understood that the charging state parameter of any cell may be used to indicate whether a charging abnormality occurs in the cell during the charging process, and in the case where a charging abnormality occurs in the cell, the charging state parameter may also be used to indicate the charging abnormality type of the cell.

In this step, the device for controlling battery charging may determine the charging abnormality type of the battery according to the charging state parameter of each abnormal cell in the battery. The charging abnormality type may include, but is not limited to, an SOH abnormality and/or an SOC abnormality.

In a possible implementation, if the SOH of any abnormal cell is abnormal, it is determined that the charging abnormality type of the battery is an SOH charging abnormality type.

In this implementation, if the SOH of any abnormal cell in the battery is learned to be abnormal according to the charging state parameter of each abnormal cell in the battery (that is, the charging abnormality type of the abnormal cell is an SOH abnormality), the device for controlling battery charging may determine that the charging abnormality type of the battery is the SOH charging abnormality type.

For example, assuming that the SOH of an abnormal cell 1 in the battery is abnormal, the SOC of an abnormal cell 2 is abnormal, and the SOC of an abnormal cell 3 is abnormal, the device for controlling battery charging may determine that the charging abnormality type of the battery is the SOH charging abnormality type.

In another possible implementation, if the SOC of each abnormal cell is abnormal, it is determined that the charging abnormality type of the battery is an SOC charging abnormality type.

In this implementation, if the SOC of each abnormal cell in the battery is learned to be abnormal according to the charging state parameter of each abnormal cell in the battery (that is, the charging abnormality type of the abnormal cell is an SOC abnormality), the device for controlling battery charging may determine that the charging abnormality type of the battery is the SOC charging abnormality type.

Certainly, the device for controlling battery charging may also determine, according to the charging state parameter of each abnormal cell, the charging abnormality type of the battery by means of other modes.

In step S1022, the charging parameters of the target charging stage are adjusted according to the charging abnormality type, and charging is performed based on the adjusted charging parameters until the target charging stage ends.

In this step, the device for controlling battery charging may correspondingly and dynamically adjust the charging parameters of the target charging stage according to the charging abnormality type, and charge the battery based on the adjusted charging parameters until the target charging stage ends.

Illustratively, the adjustment may include, but is not limited to: adjusting a charging current of the target charging stage step by step, and/or decreasing an original cut-off voltage of the target charging stage to a preset cut-off voltage.

In a possible implementation, if the charging abnormality type of the battery is the SOH charging abnormality type, the charging current of the target charging stage is gradually decreased; after each decrease in the charging current, if an anode potential of the battery is greater than a preset lithium plating voltage, and the decreased charging current is greater than a preset current threshold, the battery is charged to the preset cut-off voltage of the target charging stage according to the decreased charging current, and the charging current of the target charging stage continues to be gradually decreased until the anode potential of the battery is not greater than the preset lithium plating voltage or the decreased charging current is not greater than the preset current threshold, thus ending the target charging stage.

Illustratively, in the embodiments of the present application, the device for controlling battery charging may determine the anode potential of the battery according to an electrochemical model of the battery or determine the anode potential of the battery by detecting a reference electrode of the battery. Certainly, the device for controlling battery charging may also determine the anode potential of the battery by means of other modes.

Illustratively, the preset cut-off voltage in the embodiments of the present application may be a difference between the original cut-off voltage of the target charging stage and a preset voltage. The preset voltage may include, but is not limited to, 10 mV to 15 mV. For example, the preset voltage may be 10 mV.

The preset current threshold in the embodiments of the present application may be related to the charging current of the target charging stage and the SOH of the battery. Illustratively, the preset current threshold may include, but is not limited to: a product of the charging current of the target charging stage, the SOH of the battery, and a preset proportional coefficient. The SOH of the battery may include, but is not limited to, an average SOH value of each cell in the battery, or an average SOH value of each abnormal cell with an SOH abnormality in the battery. The preset proportional coefficient may include, but is not limited to, 0.05 to 0.2. For example, the preset proportional coefficient may be 0.1.

In this implementation, if the charging abnormality type of the battery is the SOH charging abnormality type, the device for controlling battery charging may gradually decrease the charging current of the target charging stage according to a preset step size. The preset step size is related to the charging current of the target charging stage and the SOH of the battery. Illustratively, the preset step size may include, but is not limited to: a product of the charging current of the target charging stage, the SOH of the battery, and a preset proportional coefficient. The SOH of the battery may include, but is not limited to, an average SOH value of each cell in the battery, or an average SOH value of each abnormal cell with an SOH abnormality in the battery.

In the embodiments of the present application, after each decrease in the charging current, if the anode potential of the battery is detected to be greater than the preset lithium plating voltage (for example, 0 mV), and the decreased charging current is greater than the preset current threshold, the device for controlling battery charging may charge the battery to the preset cut-off voltage of the target charging stage according to the decreased charging current, and continue to gradually decrease the charging current of the target charging stage according to the preset step size, ..., until the anode potential of the battery is not greater than the preset lithium plating voltage or the decreased charging current is not greater than the preset current threshold, thus ending the target charging stage.

As can be seen, in this implementation, if the charging abnormality type of the battery is the SOH charging abnormality type, according to the method of gradually decreasing the charging current of the target charging stage, and charging, in the case of detecting that the anode potential of the battery is greater than the preset lithium plating voltage and the decreased charging current is greater than the preset current threshold, the battery to the preset cut-off voltage of the target charging stage according to the decreased charging current, the charge amount of the battery can be further increased on the basis of protecting the abnormal cells in the battery, thereby improving the charging efficiency of the battery.

In some embodiments, based on the above embodiments, to further protect the abnormal cell in the battery, in the embodiments of the present application, in the case of detecting that the charging abnormality type of the battery is the SOH charging abnormality type, the device for controlling battery charging may decrease the charging current of the target charging stage to a first preset charging current. The first preset charging current may be related to the charging current of the target charging stage and the SOH of the battery. Illustratively, the first preset charging current may include, but is not limited to: a product of the charging current of the target charging stage and the SOH of the battery.

For ease of understanding, in the following embodiments of the present application, an exemplary introduction and description of the adjustment process of the charging parameter described above is provided by taking an example in which the device for controlling battery charging determines the anode potential of the battery according to the electrochemical model of the battery.

FIG. 3 is a first schematic flowchart of an adjustment of a charging parameter according to an embodiment of the present application. As shown in FIG. 3, in the case of detecting that the charging abnormality type of the battery is the SOH charging abnormality type, the device for controlling battery charging decreases the charging current of the target charging stage to a first preset charging current, and determines the anode potential of the battery according to the electrochemical model of the battery.

Further, the device for controlling battery charging may determine whether the anode potential of the battery is greater than the preset lithium plating voltage. If the anode potential of the battery is greater than the preset lithium plating voltage, the device for controlling battery charging may charge the battery to the preset cut-off voltage according to the first preset charging current. If the anode potential of the battery is not greater than the preset lithium plating voltage, the device for controlling battery charging may end the target charging stage.

Further, the device for controlling battery charging may determine whether the decreased charging current is greater than the preset current threshold. If the decreased charging current is greater than the preset current threshold, the device for controlling battery charging may decrease the first preset charging current to a second preset charging current according to the preset step size, and use the second preset charging current as an updated first preset charging current.

Further, the device for controlling battery charging may return to the step of determining whether the anode potential of the battery is greater than the preset lithium plating voltage, and continue execution until the anode potential of the battery is not greater than the preset lithium plating voltage or the decreased charging current is not greater than the preset current threshold, thus ending the target charging stage.

In another possible implementation, if the charging abnormality type of the battery is the SOC charging abnormality type, the charging current of the target charging stage is decreased to the preset current, and the battery is charged according to the preset current for a preset duration. Further, the charging current of the target charging stage is adjusted to a target charging current, and the battery is charged according to the target charging current. The target charging current is a charging current corresponding to a condition in which the anode potential of the battery is greater than the preset lithium plating voltage and the charging time is the shortest. Further, in the case where the voltage of each abnormal cell satisfies a condition for continuing charging, the battery is charged according to the target charging current to the preset cut-off voltage of the target charging stage.

In this implementation, if the charging abnormality type of the battery is the SOC charging abnormality type, the device for controlling battery charging may decrease the charging current of the target charging stage to the preset current, and charge the battery according to the preset current for the preset duration, such that the abnormal cell in the battery can be protected.

The preset current in the embodiments of the present application may be greater than zero, and less than or equal to 0.01 C, where C represents a battery capacity. For example, the preset current may include, but is not limited to, 0.01 C.

The preset duration in the embodiments of the present application may include, but is not limited to, 60 s to 180 s. For example, the preset duration may be 120 s.

Further, the device for controlling battery charging may adjust the charging current of the target charging stage to the target charging current, and charge the battery according to the target charging current.

The target charging current in the embodiments of the present application may be a charging current corresponding to a condition in which the anode potential of the battery is greater than the preset lithium plating voltage and the charging time is the shortest.

Illustratively, the device for controlling battery charging determines the target charging current according to the electrochemical model of the battery, with an objective that the anode potential of the battery is greater than the preset lithium plating voltage and the charging time is the shortest.

For example, the device for controlling battery charging may obtain the target charging current based on the electrochemical model of the battery, with the anode potential of the battery being greater than the preset lithium plating voltage and the charging time being an objective function.

Certainly, the device for controlling battery charging may also determine the target charging current by means of other modes.

Further, in the case where the voltage of each abnormal cell in the battery satisfies the condition for continuing charging, the device for controlling battery charging may charge the battery according to the target charging current to the preset cut-off voltage of the target charging stage, thus ending the target charging stage.

Illustratively, the condition for continuing charging in the embodiments of the present application may include, but is not limited to: a difference between the voltage of each abnormal cell in the battery and an average voltage value of voltages of other cells in the battery excluding each abnormal cell is less than a preset voltage difference. The preset voltage difference in the embodiments of the present application may include, but is not limited to, 20 mV to 30 mV. For example, the preset voltage difference may be 20 mV.

Further, in the case where the voltage of any abnormal cell in the battery does not satisfy the condition for continuing charging, the device for controlling battery charging may return to execute the step of decreasing the charging current of the target charging stage to the preset current.

As can be seen, in this implementation, if the charging abnormality type of the battery is the SOC charging abnormality type, according to the method of adjusting the charging current of the target charging stage step by step, and charging, in the case where the voltage of each abnormal cell satisfies the condition for continuing charging, the battery according to the adjusted charging current to the preset cut-off voltage of the target charging stage, the charge amount of the battery can be further increased on the basis of protecting the abnormal cells in the battery, thereby improving the charging efficiency of the battery.

For ease of understanding, in the following embodiments of the present application, an exemplary introduction and description of the adjustment process of the charging parameter described above is provided by taking an example in which the device for controlling battery charging determines the target charging current according to the electrochemical model of the battery.

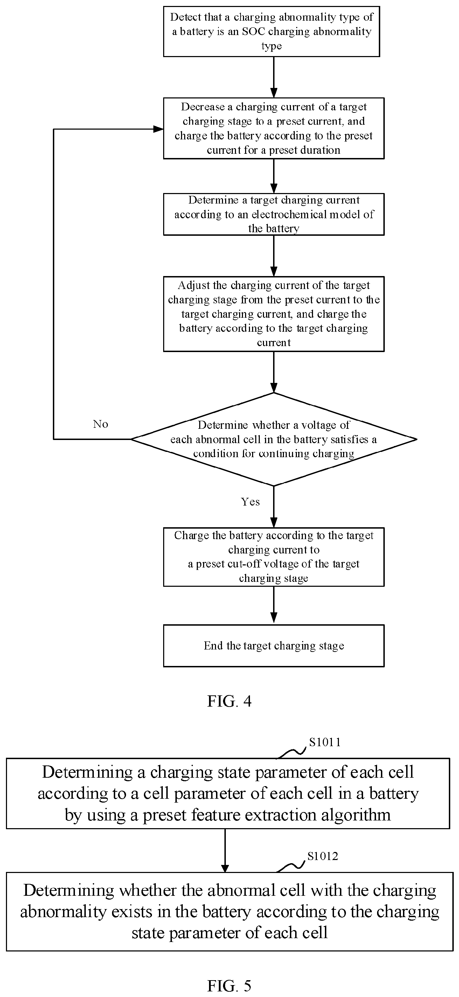

FIG. 4 is a second schematic flowchart of an adjustment of a charging parameter according to an embodiment of the present application. As shown in FIG. 4, in the case of detecting that the charging abnormality type of the battery is the SOC charging abnormality type, the device for controlling battery charging decreases the charging current of the target charging stage to a preset current, and charges the battery according to the preset current for a preset duration.

Further, the device for controlling battery charging may determine the target charging current according to the electrochemical model of the battery. The target charging current is a charging current corresponding to a condition that the anode potential of the battery is greater than the preset lithium plating voltage and the charging time is the shortest.

Further, the device for controlling battery charging may adjust the charging current of the target charging stage from the preset current to the target charging current, and charge the battery according to the target charging current.

Further, the device for controlling battery charging determines whether the voltage of each abnormal cell in the battery satisfies the condition for continuing charging. In the case where the voltage of each abnormal cell satisfies the condition for continuing charging, the device for controlling battery charging charges the battery according to the target charging current to the preset cut-off voltage of the target charging stage, thus ending the target charging stage. In the case where the voltage of any abnormal cell in the battery does not satisfy the condition for continuing charging, the device for controlling battery charging may return to execute the step of decreasing the charging current of the target charging stage to the preset current, and continue execution.

It should be noted that, if the charging abnormality type of the battery is both the SOH charging abnormality type and the SOC charging abnormality type, the device for controlling battery charging may adjust the charging parameter of the target charging stage according to an adjustment mode corresponding to any abnormality type. Optionally, the device for controlling battery charging may adjust the charging parameter of the target charging stage according to the adjustment mode corresponding to the SOH charging abnormality type.

In summary, in the embodiments of the present application, the charging abnormality type of the battery is determined according to the charging state parameter of each abnormal cell. Further, the charging parameters of the target charging stage are adjusted according to the charging abnormality type, and charging is performed based on the adjusted charging parameters until the target charging stage ends. As can be seen, in the embodiments of the present application, the method of correspondingly and dynamically adjusting the charging parameters of the target charging stage according to the charging abnormality type of the battery can be conducive to further protecting the abnormal cells in the battery, and further increasing the charge amount of the battery.

In some embodiments, FIG. 5 is a schematic flowchart of a method for controlling battery charging according to some other embodiments of the present application. Based on the above embodiments, the embodiments of the present application provide an exemplary introduction and description of the related contents of "detecting whether an abnormal cell with a charging abnormality exists in the battery" in the above step S101. As shown in FIG. 5, the step S101 according to the embodiments of the present application may include the following steps.

In step S1011, a charging state parameter of each cell is determined according to a cell parameter of each cell in the battery by using a preset feature extraction algorithm.

Illustratively, the cell parameter in the embodiments of the present application may include, but is not limited to, a cell voltage and/or a cell capacity.

Illustratively, the preset feature extraction algorithm in the embodiments of the present application may include, but is not limited to, a voltage current relation (VCR) algorithm, an incremental capacity analysis (ICA) algorithm, or a differential voltage analysis (DVA) algorithm.

In this step, the device for controlling battery charging may determine a corresponding parameter curve according to the cell parameter of each cell in the battery by using the preset feature extraction algorithm, and determine the charging state parameter of each cell according to the corresponding parameter curve.

Illustratively, if the preset feature extraction algorithm includes the VCR algorithm, the cell parameter may include the cell voltage, and correspondingly, the parameter curve may include a dV/dt curve; if the preset feature extraction algorithm includes the ICA algorithm, the cell parameter may include the cell voltage and the cell capacity, and correspondingly, the parameter curve may include a dQ/dV curve; if the preset feature extraction algorithm includes the DVA algorithm, the cell parameter may include the cell voltage and the cell capacity, and correspondingly, the parameter curve may include a dV/dQ curve.

In some embodiments, for each cell, the device for controlling battery charging may determine the parameter curve corresponding to the preset feature extraction algorithm according to the cell parameter of the cell.

In the embodiments of the present application, for each cell, the device for controlling battery charging may determine the parameter curve corresponding to the preset feature extraction algorithm by performing integration processing and/or differentiation processing, etc., on the cell parameter of the cell.

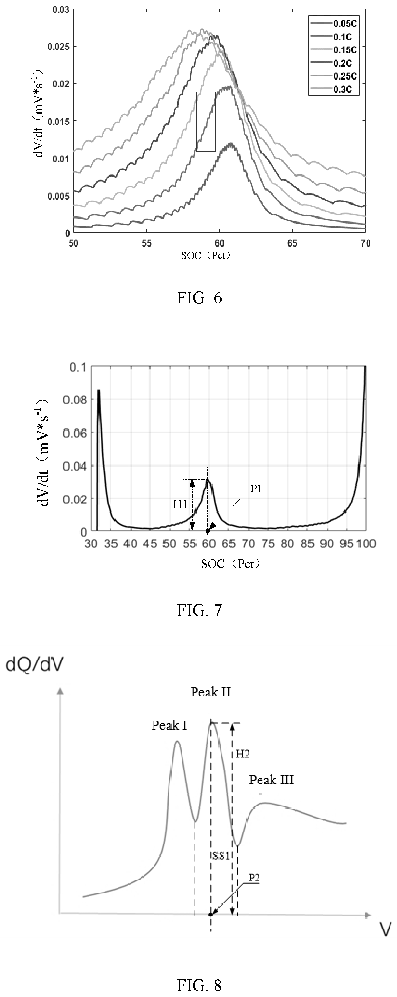

In a possible implementation, in the case where the preset feature extraction algorithm includes the VCR algorithm, the device for controlling battery charging may obtain the dV/dt curve by calculating a derivative of the cell voltage with respect to time. FIG. 6 is a first schematic diagram of a dV/dt curve according to an embodiment of the present application. Due to the phase transition characteristic of an electrode material of a battery, as shown in FIG. 6, the dV/dt curve exhibits a spike characteristic in some SOC ranges. For example, FIG. 7 is a second schematic diagram of a dV/dt curve according to an embodiment of the present application. As shown in FIG. 7, in an LFP battery, there are two plateau regions at the high SOC and the low SOC, and a spike (or referred to as a peak) as shown in FIG. 7 will appear in a transition section of the two plateau regions. The position of the peak may be used to calibrate the SOC of the cell, and the height of the peak may be used to calibrate the SOH of the cell.

In another possible implementation, in the case where the preset feature extraction algorithm includes the ICA algorithm, the device for controlling battery charging may obtain the dQ/dV curve by calculating the derivative of the cell capacity with respect to the cell voltage. FIG. 8 is a schematic diagram of a dQ/dV curve according to an embodiment of the present application. As shown in FIG. 8, typically, three distinct peaks exist in the dQ/dV curve. Because the characteristic of the second peak II is relatively stable, the second peak II may be used for battery SOC estimation and SOH estimation. The height and/or the area of the second peak II may be used to calibrate the SOH of the cell, and the position of the second peak II may be used to calibrate the SOC of the cell.

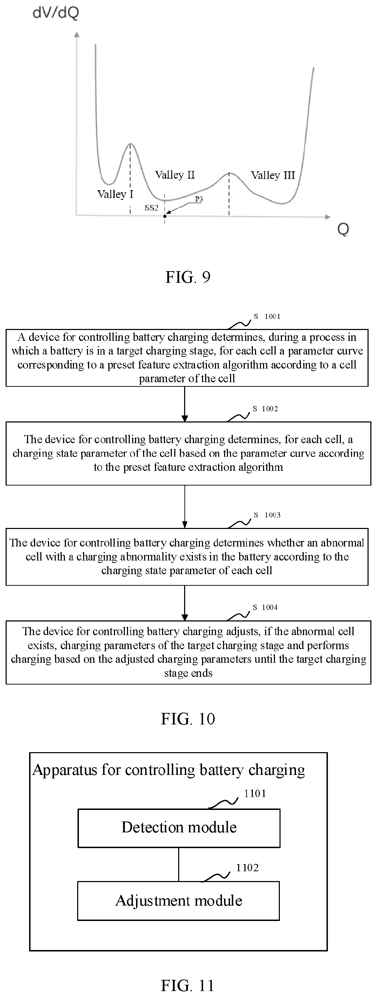

In another possible implementation, in the case where the preset feature extraction algorithm includes the DVA algorithm, the device for controlling battery charging may obtain the dV/dQ curve by calculating the derivative of the cell voltage with respect to the cell capacity. FIG. 9 is a schematic diagram of a dV/dQ curve according to an embodiment of the present application. As shown in FIG. 9, typically, three distinct valleys exist in the dV/dQ curve, and each valley has a corresponding SOC estimation method and SOH estimation method. In the embodiments of the present application, the second valley II is taken as an example for SOC estimation and SOH estimation. The area of the second valley II may be used to calibrate the SOH of the cell, and the position of the second valley II may be used to calibrate the SOC of the cell.

Further, the device for controlling battery charging may determine the charging state parameter of the cell based on the parameter curve according to the preset feature extraction algorithm.

In the embodiments of the present application, the device for controlling battery charging may determine a target indicator of a target object in the parameter curve according to the parameter curve, and determine the charging state parameter of the cell according to the target indicator of the target image and a correspondence relationship between a preset indicator and the charging state parameter.

Illustratively, the target object in the embodiments of the present application may include, but is not limited to, a peak or a valley. In the case where the target object includes a peak, the target indicator may include, but is not limited to, a position, an area, and/or a height; in the case where the target object includes a valley, the target indicator may include, but is not limited to, a position and/or an area.

For ease of understanding, the following embodiments of the present application provide an exemplary introduction and description of the processes of determining the charging state parameter of the cell when the preset feature extraction algorithm includes the VCR algorithm, the ICA algorithm, or the DVA algorithm.
1) The preset feature extraction algorithm includes the VCR algorithm.

As shown in FIG. 7, the dV/dt curve has a peak in the range of SOC 55 to SOC 65, the height of the peak may be denoted as H1, and the SOC corresponding to the top position P1 of the peak (or simply referred to as the peak position) may be denoted as S1. Research shows that: the height H1 of the peak is affected by a charging current I, an SOH, and a temperature T; that is, H1 = f1(I, SOH, T). By pre-calibrating the height H1 under different charging currents, different SOHs, and different temperatures, a parameter calibration table 1 may be established. The parameter calibration table 1 may include, but is not limited to, a correspondence relationship between a preset height and the SOH.

On the one hand, the device for controlling battery charging may determine the height H1 of the peak in the dV/dt curve according to the dV/dt curve, and determine a corresponding SOH by querying the parameter calibration table 1 according to the height H1 of the peak, the actual charging current I, and the temperature T.

On the other hand, S1 is also affected by the charging current I, the SOH, and the temperature T; that is, S1 = k1(I, SOH, T). In the case of determining the SOH, the device for controlling battery charging may determine S1 according to the actual charging current, the SOH, and the temperature T.

2) The preset feature extraction algorithm includes the ICA algorithm.

As shown in FIG. 8, the height of the second peak II may be denoted as H2, the area of the second peak II may be denoted as SS1, and the SOC corresponding to the top position P2 of the second peak II (or simply referred to as the position of the second peak) may be denoted as S2. Research shows that: the height H2 of the second peak II and the area SS1 of the second peak II are both affected by the charging current I, the SOH, and the temperature T; that is, H2 = f2(I, SOH, T), and SS1 = g1(I, SOH, T). By pre-calibrating the height H2 under different charging currents, different SOHs, and different temperatures, a parameter calibration table 2 may be established, and by pre-calibrating the area SS1 under different charging currents, different SOHs, and different temperatures, a parameter calibration table 3 may be established. The parameter calibration table 2 may include, but is not limited to, a correspondence relationship between a preset height and the SOH, and the parameter calibration table 3 may include, but is not limited to, a correspondence relationship between a preset area and the SOH.

On the one hand, the device for controlling battery charging may determine the height H2 or the area SS1 of the second peak II in the dQ/dV curve according to the dQ/dV curve, and determine a corresponding SOH by querying the parameter calibration table 2 according to the height H2 of the second peak II, the actual charging current I, and the temperature T, or determine the corresponding SOH by querying the parameter calibration table 3 according to the area SS1 of the second peak II, the actual charging current I, and the temperature T.

On the other hand, S2 is also affected by the charging current I, the SOH, and the temperature T; that is, S2 = k2(I, SOH, T). In the case of determining the SOH, the device for controlling battery charging may determine S2 according to the actual charging current, the SOH, and the temperature T.

3) The preset feature extraction algorithm includes the DVA algorithm.

As shown in FIG. 9, the area of the second valley II may be denoted as SS2, and the SOC corresponding to the bottom position P3 of the second valley II (or simply referred to as the position of the second valley) may be denoted as S3. Research shows that: the area SS2 of the second valley II is affected by the charging current I, the SOH, and the temperature T; that is, SS2 = g2(I, SOH, T). By pre-calibrating the area SS2 under different charging currents, different SOHs, and different temperatures, a parameter calibration table 4 may be established. The parameter calibration table 4 may include, but is not limited to, a correspondence relationship between a preset area and the SOH.

On the one hand, the device for controlling battery charging may determine the area SS2 of the second valley in the dV/dQ curve according to the dV/dQ curve, and determine a corresponding SOH by querying the parameter calibration table 4 according to the area SS2 of the second valley, the actual charging current I, and the temperature T.

On the other hand, S3 is also affected by the charging current I, the SOH, and the temperature T; that is, S3 = k3(I, SOH, T). In the case of determining the SOH, the device for controlling battery charging may determine S3 according to the actual charging current, the SOH, and the temperature T.

In some embodiments, considering influences such as actual sampling noise of cell parameters, the device for controlling battery charging may preprocess the data of collected cell parameters of each cell to obtain the processed cell parameters of each cell, so as to determine the charging state parameter of each cell according to the processed cell parameters of each cell, thereby improving the data quality of the cell parameters of each cell. The data preprocessing may include, but is not limited to, filtering processing.

Illustratively, for any cell parameter of any cell, the device for controlling battery charging may perform filtering processing on the cell parameter according to the following filtering processing algorithm, to obtain a filtered cell parameter:
${P}_{l , k} = {k}_{1} * {P}_{k} + {k}_{2} * {P}_{l , k - 1}$
where P_{l,k} is the filtered cell parameter at the k-th sampling time; Pₖ is the cell parameter at the k-th sampling time; P_{l,k-1} is the filtered cell parameter at a (k-1)-th sampling time; k₁ is a first filtering coefficient, for example, 0.1; and k₂ is a second filtering coefficient, for example, 0.9.

Certainly, the device for controlling battery charging may also perform the filtering processing on the cell parameter according to other filtering processing algorithms.

In step S1012, whether an abnormal cell with a charging abnormality exists in the battery is determined according to the charging state parameter of each cell.

In this step, the device for controlling battery charging may determine whether an abnormal cell with a charging abnormality exists in the battery by performing a comparative analysis on the charging state parameter of each cell, so as to adjust the charging parameters of the target charging stage in the case of detecting that the abnormal cell exists in the battery.

It should be understood that in the case of detecting that the abnormal cell exists in the battery, the device for controlling battery charging may further report the abnormal cell in the battery to an upper-level device. The upper-level device may include, but is not limited to, a main control device of an electric device, a main control device of an electrical energy storage system, or a server.

In a possible implementation, if a difference between a charging state parameter of a first cell in the battery and an average state parameter value of charging state parameters of other cells in the battery excluding the first cell is greater than a first preset threshold, the device for controlling battery charging may determine that the first cell is an abnormal cell.

For example, if a difference between an SOC of the first cell in the battery and an average SOC value of SOCs of other cells in the battery excluding the first cell is greater than a first preset SOC threshold, the device for controlling battery charging may determine that the first cell is the abnormal cell.

For another example, if a difference between an SOH of the first cell in the battery and an average SOH value of SOHs of other cells in the battery excluding the first cell is greater than a first preset SOH threshold, the device for controlling battery charging may determine that the first cell is the abnormal cell.

In another possible implementation, if differences between a charging state parameter of a second cell in the battery and charging state parameters of a plurality of cells in the battery excluding the second cell are all greater than a second preset threshold, the device for controlling battery charging may determine that the second cell is the abnormal cell.

For example, if differences between an SOC of the second cell in the battery and SOCs of a plurality of cells in the battery excluding the second cell are all greater than a second preset SOC threshold, the device for controlling battery charging may determine that the second cell is the abnormal cell.

For another example, if differences between an SOH of the second cell in the battery and SOHs of a plurality of cells in the battery excluding the second cell are all greater than a second preset SOH threshold, the device for controlling battery charging may determine that the second cell is the abnormal cell.

Certainly, the device for controlling battery charging may also determine, according to the charging state parameter of each cell, whether an abnormal cell with a charging abnormality exists in the battery by means of other modes.

In summary, in the embodiments of the present application, the charging state parameter of each cell is determined according to the cell parameter of each cell in the battery by using the preset feature extraction algorithm. Further, whether an abnormal cell with a charging abnormality exists in the battery is determined according to the charging state parameter of each cell. As can be seen, in the embodiments of the present application, during the process in which the battery is in the target charging stage, the charging state parameter is determined according to the cell parameter of each cell in the battery, and whether an abnormal cell with a charging abnormality exists in the battery is determined according to the charging state parameter, thereby facilitating the adjustment of the charging parameters of the target charging stage in the case of detecting that the abnormal cell exists in the battery. As can be seen, the embodiments of the present application can facilitate the adjustment of the charging parameters of the target charging stage in a timely manner in the case where the charging parameters need to be adjusted, thereby further saving adjustment resources on the basis of protecting the abnormal cell in the battery.

In some embodiments, FIG. 10 is a schematic flowchart of a method for controlling battery charging according to some other embodiments of the present application. Based on the above embodiments, the embodiments of the present application provide an exemplary introduction and description of the overall flow of the method for controlling battery charging. As shown in FIG. 10, the method according to the embodiments of the present application may include the following steps.

In step S1001, a device for controlling battery charging determines, during a process in which a battery is in a target charging stage, for each cell a parameter curve corresponding to a preset feature extraction algorithm according to a cell parameter of the cell.

In step S1002, the device for controlling battery charging determines, for each cell, a charging state parameter of the cell based on the parameter curve according to the preset feature extraction algorithm.

In step S1003, the device for controlling battery charging determines whether an abnormal cell with a charging abnormality exists in the battery according to the charging state parameter of each cell.

In step S1004, the device for controlling battery charging adjusts, if the abnormal cell exists, charging parameters of the target charging stage and performs charging based on the adjusted charging parameters until the target charging stage ends.

For the implementations and the technical effects of each step in the embodiments of the present application, reference may be made to related contents in the above embodiments, and the details will not be repeated here.

It should be understood that although the steps in the flowcharts related to the embodiments described above are displayed sequentially according to the direction of the arrows, these steps are not necessarily executed in the order indicated by the arrows. Unless explicitly stated herein, there is no strict sequential limitation to the execution of these steps, and they can be executed in other orders. Moreover, at least some of the steps in the flowcharts related to the embodiments described above may include multiple steps or stages, which are not necessarily executed at the same time but may be executed at different times. The execution order of these steps or stages is not necessarily sequential; they may be executed in turn or alternately with other steps or at least some of the steps or stages in other steps.

Based on the same inventive concept, the embodiments of the present application further provide an apparatus for controlling battery charging configured to implement the involved method for controlling battery charging described above. The implementation solution for solving problems provided by the apparatus is similar to the implementation solution recorded in the method described above. Therefore, for specific limitations in one or more embodiments of the apparatus for controlling battery charging provided below, reference may be made to the limitations on the method for controlling battery charging described above, and the details will not be repeated here.

In some embodiments, FIG. 11 is a schematic structural diagram of an apparatus for controlling battery charging according to some embodiments of the present application. The apparatus for controlling battery charging provided according to the embodiments of the present application may be applicable to the device for controlling battery charging. As shown in FIG. 11, the apparatus for controlling battery charging according to the embodiments of the present application may include: a detection module 1101 and an adjustment module 1102.

The detection module 1101 is configured to detect, during a process in which a battery is in a target charging stage, whether an abnormal cell with a charging abnormality exists in the battery.

The adjustment module 1102 is configured to adjust, if the abnormal cell exists, charging parameters of the target charging stage, and perform charging based on the adjusted charging parameters until the target charging stage ends, where the charging parameters include a charging current and a cut-off voltage.

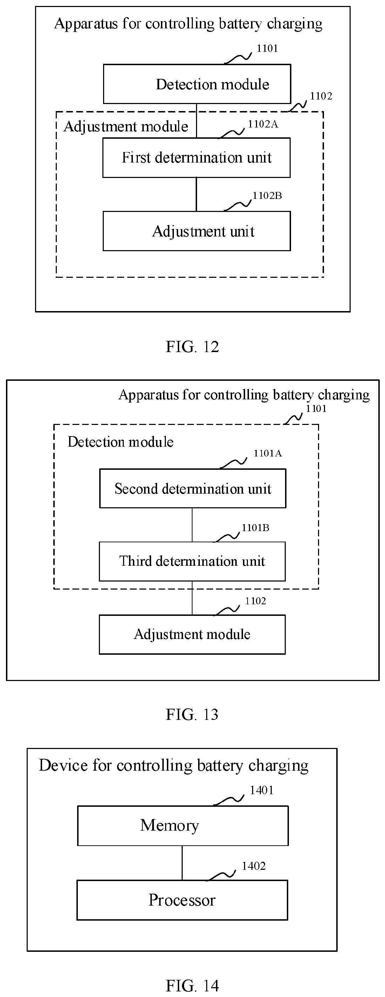

In some embodiments, FIG. 12 is a schematic structural diagram of an apparatus for controlling battery charging according to some other embodiments of the present application. Based on the above embodiments, the embodiments of the present application provide an exemplary introduction and description of the related contents of the above adjustment module 1102. As shown in FIG. 12, the adjustment module 1102 may include:
a first determination unit 1102A, configured to determine a charging abnormality type of the battery according to a charging state parameter of each abnormal cell; and
an adjustment unit 1102B, configured to adjust charging parameters of the target charging stage according to the charging abnormality type, and perform charging based on the adjusted charging parameters until the target charging stage ends.

In some embodiments, the charging state parameter includes a state of health (SOH) and/or a state of charge (SOC), and the first determination unit 1102A is specifically configured to:
determine, if the SOH of any abnormal cell is abnormal, that the charging abnormality type of the battery is an SOH charging abnormality type; and
determine, if the SOC of each abnormal cell is abnormal, that the charging abnormality type of the battery is an SOC charging abnormality type.

In some embodiments, the adjustment unit 1102B is specifically configured to:
gradually decrease, if the charging abnormality type of the battery is the SOH charging abnormality type, the charging current of the target charging stage; and
charge, after each decrease in the charging current, the battery to a preset cut-off voltage of the target charging stage according to a decreased charging current if an anode potential of the battery is greater than a preset lithium plating voltage and the decreased charging current is greater than a preset current threshold, and continue to gradually decrease the charging current of the target charging stage, until the anode potential of the battery is not greater than the preset lithium plating voltage or the decreased charging current is not greater than the preset current threshold, thus ending the target charging stage, where the preset cut-off voltage may be a difference between an original cut-off voltage of the target charging stage and a preset voltage.

In some embodiments, the adjustment unit 1102B is specifically configured to:
decrease, if the charging abnormality type of the battery is the SOC charging abnormality type, the charging current of the target charging stage to a preset current, and charge the battery according to the preset current for a preset duration;
adjust the charging current of the target charging stage to a target charging current, and charge the battery according to the target charging current, where the target charging current is a charging current corresponding to a condition in which an anode potential of the battery is greater than a preset lithium plating voltage and a charging time is shortest; and
charge, if a voltage of each abnormal cell satisfies a condition for continuing charging, the battery to a preset cut-off voltage of the target charging stage according to the target charging current, where the preset cut-off voltage may be a difference between an original cut-off voltage of the target charging stage and a preset voltage.

In some embodiments, the adjustment unit 1102B is further configured to:
determine the target charging current according to an electrochemical model of the battery, with an objective that the anode potential of the battery is greater than the preset lithium plating voltage and the charging time is the shortest.

In some embodiments, the adjustment unit 1102B is further configured to:
return, in a case where the voltage of any abnormal cell does not satisfy the condition for continuing charging, to execute the step of decreasing the charging current of the target charging stage to the preset current.

In some embodiments, FIG. 13 is a schematic structural diagram of an apparatus for controlling battery charging according to some other embodiments of the present application. Based on the above embodiments, the embodiments of the present application provide an exemplary introduction and description of the related contents of the above detection module 1101. As shown in FIG. 13, the detection module 1101 may include:
a second determination unit 1101A, configured to determine a charging state parameter of each cell according to a cell parameter of each cell in the battery by using a preset feature extraction algorithm; and
a third determination unit 1101B, configured to determine whether an abnormal cell with a charging abnormality exists in the battery according to the charging state parameter of each cell.

In some embodiments, the third determination unit 1101B is specifically configured to:
determine, if a difference between a charging state parameter of a first cell in the battery and an average state parameter value of charging state parameters of other cells in the battery excluding the first cell is greater than a first preset threshold, that the first cell is the abnormal cell.

In some embodiments, the third determination unit 1101B is specifically configured to:
determine, if differences between a charging state parameter of a second cell in the battery and charging state parameters of a plurality of cells in the battery excluding the second cell are all greater than a second preset threshold, that the second cell is the abnormal cell.

In some embodiments, the second determination unit 1101A is specifically configured to:
determine, for each cell, a parameter curve corresponding to the preset feature extraction algorithm according to the cell parameter of the cell; and
determine, based on the parameter curve, the charging state parameter of the cell according to the preset feature extraction algorithm.

The apparatus for controlling battery charging according to the embodiments of the present application may be configured to execute the technical solutions in the above embodiments of the method for controlling battery charging of the present application. The implementation principles and technical effects are similar, and the details will not be repeated here.

Various modules in the above apparatus for controlling battery charging may be implemented entirely or partially by software, hardware, or a combination of software and hardware. The various modules may be embedded in or independent of the processor in the device for controlling battery charging in the form of hardware, or stored in the memory in the device for controlling battery charging in the form of software, to enable the processor to call and execute operations corresponding to the modules.

In some embodiments, FIG. 14 is a schematic structural diagram of a device for controlling battery charging according to some embodiments of the present application. As shown in FIG. 14, the device for controlling battery charging according to the embodiments of the present application may include: a memory 1401 and a processor 1402. The memory 1401 stores a computer program, and the processor 1402, when executing the computer program, implements the technical solutions in the above embodiments of the method for controlling battery charging of the present application. The implementation principles and technical effects are similar, and the details will not be repeated here.

Those skilled in the art may understand that the structure shown in FIG. 14 is merely a block diagram of part of the structure related to the solutions of the present application, and does not constitute a limitation on the device for controlling battery charging to which the solutions of the present application are applied. The specific device for controlling battery charging may include more or fewer components than those shown in the figure, combine some components, or have a different component arrangement.

In some embodiments, a computer-readable storage medium is further provided. The computer-readable storage medium stores a computer program. The computer program, when executed by a processor, causes the processor to implement the technical solutions in the above embodiments of the method for controlling battery charging of the present application. The implementation principles and technical effects are similar, and the details will not be repeated here.

In some embodiments, a computer program product is further provided. The computer program product includes a computer program. The computer program, when executed by a processor, causes the processor to implement the technical solutions in the above embodiments of the method for controlling battery charging of the present application. The implementation principles and technical effects are similar, and the details will not be repeated here.

It can be understood by those of ordinary skill in the art that all or part of the processes in the methods of the above embodiments may be implemented by executing a computer program to instruct the relevant hardware. The computer program may be stored in a non-volatile computer-readable storage medium. The computer program, when executed, may include the processes in the methods of the above embodiments. Any reference to a memory, a feature database, or other media used in the embodiments according to the present application may include at least one of a non-volatile memory and a volatile memory. The non-volatile memory may include a read-only memory (ROM), a magnetic tape, a floppy disk, a flash memory, an optical storage, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM), an external high-speed cache memory, and the like. By way of illustration and not limitation, RAM may be in various forms, such as a static random access memory (SRAM) or a dynamic random access memory (DRAM). The processor involved in the embodiments according to the present application may be a general-purpose processor, a central processing unit, a graphics processing unit, a digital signal processor, a programmable logic device, or a feature data processing logic device based on quantum computing, but is not limited thereto.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A method for controlling battery charging, wherein the method comprises:
detecting, during a process in which a battery is in a target charging stage, whether an abnormal cell with a charging abnormality exists in the battery; and
adjusting, if the abnormal cell exists, charging parameters of the target charging stage, and performing charging based on the adjusted charging parameters until the target charging stage ends, wherein the charging parameters comprise a charging current and a cut-off voltage.

2. The method according to claim 1, wherein adjusting the charging parameters of the target charging stage, and performing charging based on the adjusted charging parameters until the target charging stage ends comprises:
determining a charging abnormality type of the battery according to a charging state parameter of each abnormal cell; and
adjusting the charging parameters of the target charging stage according to the charging abnormality type, and performing charging based on the adjusted charging parameters until the target charging stage ends.

3. The method according to claim 2, wherein the charging state parameter comprises a state of health (SOH) and/or a state of charge (SOC), and determining the charging abnormality type of the battery according to the charging state parameter of each abnormal cell comprises:
determining, if the SOH of any abnormal cell is abnormal, that the charging abnormality type of the battery is an SOH charging abnormality type; and
determining, if the SOC of each abnormal cell is abnormal, that the charging abnormality type of the battery is an SOC charging abnormality type.

4. The method according to claim 3, wherein adjusting the charging parameters of the target charging stage according to the charging abnormality type, and performing charging based on the adjusted charging parameters until the target charging stage ends comprises:
gradually decreasing, if the charging abnormality type of the battery is the SOH charging abnormality type, the charging current of the target charging stage; and
charging, after each decrease in the charging current, the battery to a preset cut-off voltage of the target charging stage according to a decreased charging current if an anode potential of the battery is greater than a preset lithium plating voltage and the decreased charging current is greater than a preset current threshold, and continuing to gradually decrease the charging current of the target charging stage, until the anode potential of the battery is not greater than the preset lithium plating voltage or the decreased charging current is not greater than the preset current threshold, thus ending the target charging stage, wherein the preset cut-off voltage is a difference between an original cut-off voltage of the target charging stage and a preset voltage.

5. The method according to claim 3, wherein adjusting the charging parameters of the target charging stage according to the charging abnormality type, and performing charging based on the adjusted charging parameters until the target charging stage ends comprises:
decreasing, if the charging abnormality type of the battery is the SOC charging abnormality type, the charging current of the target charging stage to a preset current, and charging the battery according to the preset current for a preset duration;
adjusting the charging current of the target charging stage to a target charging current, and charging the battery according to the target charging current, wherein the target charging current is a charging current corresponding to a condition in which an anode potential of the battery is greater than a preset lithium plating voltage and a charging time is shortest; and
charging, if a voltage of each abnormal cell satisfies a condition for continuing charging, the battery to a preset cut-off voltage of the target charging stage according to the target charging current, wherein the preset cut-off voltage is a difference between an original cut-off voltage of the target charging stage and a preset voltage.

6. The method according to claim 5, wherein the method further comprises:
determining the target charging current according to an electrochemical model of the battery, with an objective that the anode potential of the battery is greater than the preset lithium plating voltage and the charging time is the shortest.

7. The method according to claim 6, wherein the method further comprises:
returning, in a case where the voltage of any abnormal cell does not satisfy the condition for continuing charging, to execute the step of decreasing the charging current of the target charging stage to the preset current.

8. The method according to any one of claims 1 to 7, wherein detecting whether the abnormal cell with the charging abnormality exists in the battery comprises:
determining a charging state parameter of each cell according to a cell parameter of each cell in the battery by using a preset feature extraction algorithm; and
determining whether the abnormal cell with the charging abnormality exists in the battery according to the charging state parameter of each cell.

9. The method according to claim 8, wherein determining whether the abnormal cell with the charging abnormality exists in the battery according to the charging state parameter of each cell comprises:
determining, if a difference between a charging state parameter of a first cell in the battery and an average state parameter value of charging state parameters of other cells in the battery excluding the first cell is greater than a first preset threshold, that the first cell is the abnormal cell.

10. The method according to claim 8, wherein determining whether the abnormal cell with the charging abnormality exists in the battery according to the charging state parameter of each cell comprises:
determining, if differences between a charging state parameter of a second cell in the battery and charging state parameters of a plurality of cells in the battery excluding the second cell are all greater than a second preset threshold, that the second cell is the abnormal cell.

11. The method according to any one of claims 8 to 10, wherein determining the charging state parameter of each cell according to the cell parameter of each cell in the battery by using the preset feature extraction algorithm comprises:
determining, for each cell, a parameter curve corresponding to the preset feature extraction algorithm according to the cell parameter of the cell; and
determining, based on the parameter curve, the charging state parameter of the cell according to the preset feature extraction algorithm.

12. An apparatus for controlling battery charging, wherein the apparatus comprises:
a detection module, configured to detect, during a process in which a battery is in a target charging stage, whether an abnormal cell with a charging abnormality exists in the battery; and
an adjustment module, configured to adjust, if the abnormal cell exists, charging parameters of the target charging stage, and perform charging based on the adjusted charging parameters until the target charging stage ends, wherein the charging parameters comprise a charging current and a cut-off voltage.

13. A device for controlling battery charging, comprising a memory and a processor, the memory storing a computer program, wherein the processor, when executing the computer program, implements steps of the method according to any one of claims 1 to 11.

14. A computer-readable storage medium storing a computer program, wherein the computer program, when executed by a processor, causes the processor to implement steps of the method according to any one of claims 1 to 11.
